# EUROPÄISCHE PATENTSCHRIFT

(11) **EP 1 187 700 B1**
(45) Veröffentlichungstag und Bekanntmachung des Hinweises auf die Patenterteilung: **14.01.2004**
(21) Anmeldenummer: 00935046.3
(22) Anmeldetag: 17.05.2000
(51) Int. Cl.: B23K 37/047, B25J 9/16, B23Q 17/22

(54) **POSITIONIERVORRICHTUNG FÜR WERKSTÜCKTRÄGER ODER WERKSTÜCKE**
POSITIONING DEVICE FOR A WORKPIECE HOLDER OR WORKPIECES
DISPOSITIF DE POSITIONNEMENT POUR PORTE-PIECES OU PIECES

(30) Priorität: 22.05.1999 DE 29909047 U
(43) Veröffentlichungstag der Anmeldung: 20.03.2002
(73) Patentinhaber: KUKA Schweissanlagen GmbH, 86165 Augsburg (DE)
(72) Erfinder: STIMMEL, Burkhard, D-86150 Augsburg (DE); FISCHER, Wolfgang, D-86199 Augsburg (DE)
(74) Vertreter: Ernicke, Hans-Dieter, Dipl.-Ing.
(86) Internationale Anmeldenummer: PCT/EP2000/004452
(87) Internationale Veröffentlichungsnummer: WO 2000/071292

(56) Entgegenhaltungen:
- EP-A- 0 753 379
- EP-A- 0 849 032
- WO-A-96/30170
- US-A- 4 892 457
- US-A- 5 391 852

## Beschreibung

Die Erfindung betrifft ein Positionierverfahren und eine Positioniervorrichtung für Werkstückträger oder Werkstücke, die von einem mehrachsigen Manipulator gehalten und geführt werden mit den Merkmalen im Oberbegriff des Verfahrens- und Vorrichtungshauptanspruchs 1 bzw. 3.

In der Praxis ist es bekannt, daß mehrachsige Manipulatoren, insbesondere mehrachsige Industrieroboter, Werkstückträger bzw. Greifeinrichtungen mit ein oder mehreren Werkstücken fliegend halten und führen. Die Positioniergenauigkeit hängt von der Bahngenauigkeit und der Steifheit des Roboters ab.

Aus der Praxis sind ferner Drehtische als Positioniervorrichtungen für Werkstücke bekannt. Die Werkstücke müssen hierbei umgespannt und auf dem Drehtisch positioniert werden. Sie können dann von einer Bearbeitungsvorrichtung bearbeitet werden. Nach Beendigung des Prozesses müssen die Werkstücke wiederum umgespannt und weitertransportiert werden. Anstelle von Drehtischen werden auch Drehtrommeln oder Drehwendepositionierer eingesetzt. Diesen Geräten ist außerdem der Nachteil zu eigen, daß sie wegen ihrer beschränkten Kinematik auch keine optimale Prozeßlage und -orientierung für die Werkstücke bieten.

Aus der US-A-4,892,857 ist eine Kalibriervorrichtung für einen Roboter bekannt. Sie besteht aus einer stationär angeordneten Kalibrieraufnahme und einem am Roboter angeordneten Kalibrierwerkzeug. An der Kalibrieraufnahme sind zwei prismenartige Zentrieraufnahmen übereinander angeordnet, die mit zwei am Kalibrierwerkzeug angeordneten Kugelköpfen zusammenwirken. Über die Kalibriervorrichtung werden die Achsen des Roboters in eine vorbekannte definierte Position gefahren, wobei etwaig auftretende Achsfehler recherisch ermittelt und kompensiert werden.

Eine ähnliche Kalibriervorrichtung zeigt auch die WO 96/30170. Hier werden für die exakte Positionierung der Roboterachsen Kugelköpfe in Verbindung mit prismatischen Aufnahmen oder Kegelstifte in Verbindung mit Rohraufnahmen verwendet.

Eine weitere derartige Kalibriervorrichtung ist aus der US-A-5,391,852 bekannt, bei der die Kalibrierung des Roboters anhand einer von der Roboterhand geführten Schweißdüse erfolgt.

Es ist Aufgabe der vorliegenden Erfindung, eine Möglichkeit zur besseren und genaueren Positionierung von Werkstückträgern oder Werkstücken aufzuzeigen, welche von einem mehrachsigen Manipulator gehalten und geführt werden.

Die Erfindung löst diese Aufgabe mit den Merkmalen im Verfahrens- und Vorrichtungshauptanspruch 1 bzw. 3. Die erfindungsgemäße Positioniervorrichtung bietet eine wesentliche Verbesserung der Positioniergenauigkeit. Der Manipulator stützt den Werkstückträger oder das Werkstück mittels einer Aufnahmevorrichtung ab, die eine bewegliche Abstützung mit ein oder mehreren Bewegungsachsen erlaubt. Dadurch kann der Manipulator den Werkstückträger oder das Werkstück in unterschiedlichen Lagen orientieren, ohne die Abstützung der Positioniervorrichtung zu verlassen. Das Werkstück kann dadurch in verschiedene bearbeitungsgünstige Lagen gebracht werden.

Bei einem Schweißprozeß kann das Werkstück z.B. zumindest weitgehend in einer für das Schweißbad günstigen Wannenlage gehalten werden. Zudem ergibt sich eine bessere Zugänglichkeit für die zugeordneten Bearbeitungsvorrichtungen, insbesondere für Arbeitsroboter. Durch die Positioniervorrichtung und die zusätzliche Werkstückabstützung kann der Manipulator oder Positionierroboter höher belastet und in gewissen Bereichen auch gezielt und kontrolliert bis an die Sicherheitsgrenze belastet werden. Zudem ist es möglich, daß in einem verketteten Zellensystem eine Weitergabe des Werkstücks beziehungsweise Werkstückträgers in die Folgezellen geschehen kann. Die erfindungsgemäße Positioniervorrichtung läßt sich in Verbindung mit unterschiedlichsten Werkstückbearbeitungsprozessen und Bearbeitungseinrichtungen einsetzen. Hierbei ergeben sich auch Vorteile für die Qualitätssicherung.

Von besonderem Vorteil ist eine mehrachsige Orientierung über eine als Prisma oder Konus ausgebildete Zentrieraufnahme. Diese bietet eine Orientierungsmöglichkeit in drei Schwenkachsen. Durch zusätzliche translatorische Bewegungsachsen kann auch eine sechsachsige Orientierungs- und Positionierungsmöglichkeit geschaffen werden. Dies bietet besondere Vorteile bei der Einhaltung der optimalen Bauteillage auch bei gekrümmten Bahnen durch synchrones Verfahren des Manipulators und des Arbeitsroboters.

Wenn das Werkstück an einem Werkstückträger gespannt ist und mit diesem positioniert wird, kann über den Werkstückträger auch der Werkstücktransport realisiert werden. Dabei können Umspannarbeiten entfallen. Die Automationsflexibilität steigt. Wartungsarbeiten am Werkstückträger können offline geschehen, wodurch die Anlagenverfügbarkeit steigt. Ferner ist eine zeitliche Entkoppelung des manuellen Einlegevorgangs vom Bearbeitungsvorgang möglich. Bei Verwendung unterschiedlicher Werkstückträger ist zudem ein Typenmix ohne größeren Aufwand möglich. Hierbei werden die Werkstückträger über standardisierte Werkzeugwechsler an- bzw. abgekoppelt.

Die Erfindung ermöglicht es ferner, die Bearbeitungsschritte und damit die Zahl der zu durchlaufenden Bearbeitungsstationen zu reduzieren. Durch die bessere Orientierungsmöglichkeit von Manipulator und Arbeitsroboter können eine größere Zahl von Bearbeitungsschritten mit den gleichen Werkzeuggeometrien erledigt werden. Dies ist unter anderem auf die bessere Zugänglichkeit des Werkstücks zurückzuführen. Hierbei ist es insbesondere günstig, wenn der Werkstückträger vom Manipulator und der Aufnahmevorrichtung an zwei weit auseinanderliegenden und einander gegenüberliegenden Stellen gefaßt und abgestützt wird. Die bessere Zugänglichkeit und die damit verbundene höhere Prozeßgenauigkeit kommen auch einer höheren Qualität von Maßhaltigkeit der Werkstücke zugute. Letztendlich läßt sich auch eine Qualitätssicherung durch geometrisches Abtasten des Werkstückträgers mit gespanntem Werkstück in einer separaten Meßposition und durch ein nachfolgendes Abtasten des Werkstücks nach Öffnen des Werkstückträger beziehungsweise ein Abtasten des Werkstückträgers ohne Werkstück erreichen.

Weitere vorteilhafte Ausgestaltungen ergeben sich aus den Unteransprüchen.

Die Erfindung ist in den Zeichnungen beispielsweise und schematisch dargestellt. Im einzelnen zeigen:
- Figur 1:: einen Manipulator mit einem Werkstückträger, einem Werkstück und einer Positioniereinrichtung in einer schematischen Seitenansicht und
- Figur 2:: eine Draufsicht auf eine Anordnung gemäß Figur 1 in Verbindung mit einer Bearbeitungsvorrichtung, insbesondere einem Arbeitsroboter.

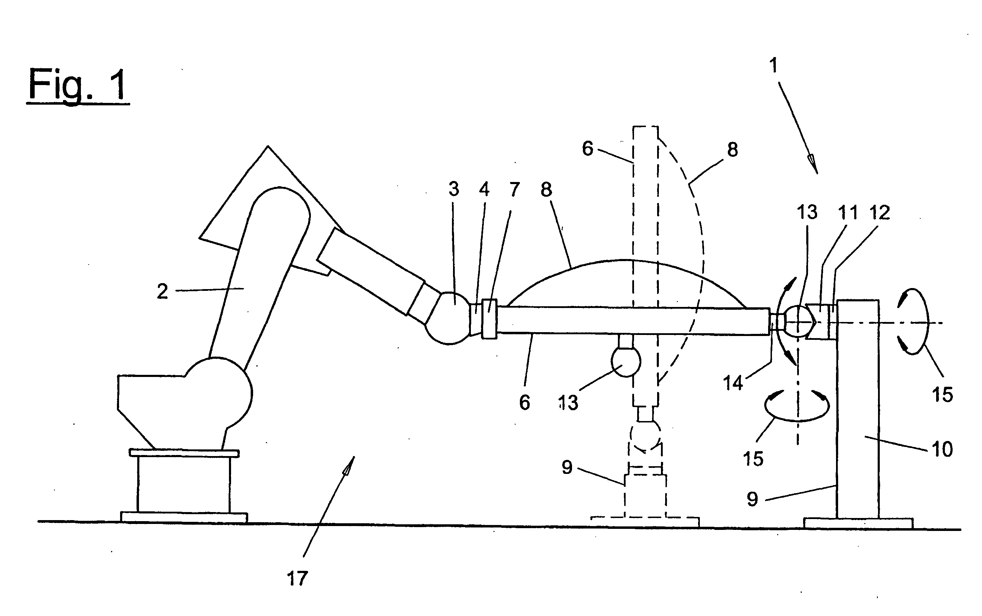

Figur 1 zeigt schematisch eine Bearbeitungsstation (17), beispielsweise eine Bearbeitungszelle, die Bestandteil einer Anordnung von mehreren Stationen oder Zellen sein kann. In der Station oder Zelle (17) befindet sich mindestens ein Manipulator (2), der einen Werkstückträger (6) mit einem positionsgenau aufgespannten Werkstück (8) hält und führt. Zudem beinhaltet die Station oder Zelle (17) eine Positioniereinrichtung (1), an der der Manipulator (2) den Werkstückträger (6) während des Bearbeitungsvorganges abstützt. Zudem können sich in der Station oder Zelle ein oder mehrere Bearbeitungsvorrichtungen (5), beispielsweise mehrachsige Arbeitsroboter, befinden, die das gehaltene und geführte Werkstück (8) in beliebig geeigneter Weise mit ein oder mehreren Werkzeugen (16) bearbeiten.

Im gezeigten Ausführungsbeispiel ist der mehrachsige Manipulator (2) als Schwerlast-Positionierroboter mit sechs oder mehr Achsen ausgebildet. Der Manipulator oder Positionierroboter (2) hat eine Hand (3) in einer angeflanschten Wechselvorrichtung (4), mittels derer er den Werkstückträger (6) lösbar hält. Der Werkstückträger (6) besitzt mindestens einen Anschluß (7) zur Verbindung mit der Wechselvorrichtung (4) beziehungsweise dem Manipulator oder Positionierroboter (2). Der Anschluß (7) ist vorzugsweise randseitig am Werkstückträger (6) angeordnet. Hierdurch wird der Werkstückträger (6) vom Manipulator oder Positionierroboter (2) im wesentlichen fliegend gehalten und geführt.

Die Positioniereinrichtung (1) besteht aus mindestens einer Aufnahmevorrichtung (9), an der der Manipulator (2) den Werkstückträger (6) in ein oder mehreren Achsen (15) beweglich abstützen kann. In Figur 1 sind beispielsweise zwei Aufnahmevorrichtungen (9) in unterschiedlichen Positionen und Ausrichtungen angeordnet. Ihre Zahl kann auch größer sein. Desgleichen kann auch ihre Ausrichtung variieren.

Die einzelnen Aufnahmevorrichtungen (9) besitzen jeweils mindestens eine Zentrieraufnahme (11), die die ein- oder mehrachsig bewegliche Abstützung ermöglicht. In der gezeigten Ausführungsform sind die Zentrieraufnahmen (11) als Prisma oder als Konus ausgebildet.

Die einzelnen Aufnahmevorrichtungen (9) besitzen ferner ein Gestell (10), an dem jeweils ein oder mehrere Zentrieraufnahmen (11) angeordnet sind. Die Gestelle (10) sind im gezeigten Ausführungsbeispiel ortsfest und flurgebunden angeordnet. Sie können alternativ auch beweglich und insbesondere in ein oder mehreren translatorischen Achsen verfahrbar sein. Die Zentrieraufnahmen (11) sind vorzugsweise starr an den Gestellen (10) befestigt. Sie können aber auch ihrerseits in ein oder mehreren Achsen beweglich an den Gestellen (10) positioniert sein.

Am Werkstückträger (6) sind über ein oder mehrere geeignete Ansätze (14) ein oder mehrere Abstützelemente (13) angeordnet, die vorzugsweise als Sphären (13) oder Kugelteile ausgebildet sind. Sie wirken mit den Zentrieraufnahmen (11) zusammen und erlauben eine Abstützung mit ein- oder mehrachsiger Positionierbarkeit oder Orientierbarkeit. Die Sphären (13) sind im gezeigten Ausführungsbeispiel als Kugelköpfe ausgebildet, die größer als eine Halbkugel sind. Alternativ können sie auch als Halbkugelabschnitte oder noch kleinere Kugelteilabschnitte ausgebildet sein. In einer weiteren Abwandlung kann es sich auch um anders geartete ballige oder abgerundete Teile, z.B. auch um ovale Körper, handeln. Eine Mehrfachanordnung von Sphären (13) ermöglicht es, den Werkstückträger (6) in unterschiedlichen Lagen und an unterschiedlichen. Aufnahmevorrichtungen (9) abzustützen.

An den Zentrieraufnahmen (11) können ein oder mehrere Sensoren (12) angeordnet sein, die bei Kontakt zwischen der Sphäre (13) und Zentrieraufnahme (11) die Kräfte und/oder Wege oder andere physikalische Werte aufnehmen. Die Sensoren (12) sind dazu in beliebig geeigneter Weise ausgebildet und an geeigneten Stellen angeordnet, z.B. innerhalb der Berührungszone der Zentrieraufnahme (11) oder an der Verbindungsstelle zwischen Zentrieraufnahme (11) und Gestell (10).

Über die Sensoren (12) kann z.B. die anstehende Kraft oder der Weg gemessen werden. Bei einer geeigneten Mehrfachanordnung von Sensoren (12) oder einen dreidimensionalen Kraft- oder Wegsensor läßt sich dabei feststellen, ob die Sphäre (13) exakt in der Zentrieraufnahme (11) positioniert ist. Hierdurch kann auch die Andrückkraft und Positioniergenauigkeit des Manipulators (2) festgestellt und entsprechend nachgeregelt werden. Ist z.B. die anstehende axiale Kraft zu groß, bewegt sich der Manipulator (2) so weit zurück, bis die Kräfte ausgeglichen sind beziehungsweise ihren Sollwert erreicht haben. Umgekehrt muß bei einer zu geringen Kraft der Manipulator (2) den Werkstückträger (6) nachführen und stärker gegen die Zentrieraufnahme (11) pressen. Über diese Kraftmessung kann zudem festgestellt werden, ob der Manipulator (2) gegebenenfalls überlastet wird. Ferner läßt sich durch eine geeignete Sensoranordnung (12) feststellen, ob die Anpreßrichtung des Manipulators (2) korrekt ist. Über die Sensoranordnung (12) kann zudem mit einer geeigneten Steuerung und einem geeigneten Programm der Tool-Center-Point (TCP) der Sphärenposition im Prozeß ein- oder mehrmalig ermittelt beziehungsweise korrigiert werden.

Durch die mehrachsig beweglichen Aufnahmevorrichtungen (9) kann der Manipulator (2) den Werkstückträger (6) in unterschiedlichen Lagen orientieren und gegenüber der Bearbeitungsvorrichtung (5) in geeigneter Weise ausrichten. Hierbei kann auch eine grundlegende Umorientierung durch Wechsel der Aufnahmevorrichtung (9) geschehen.

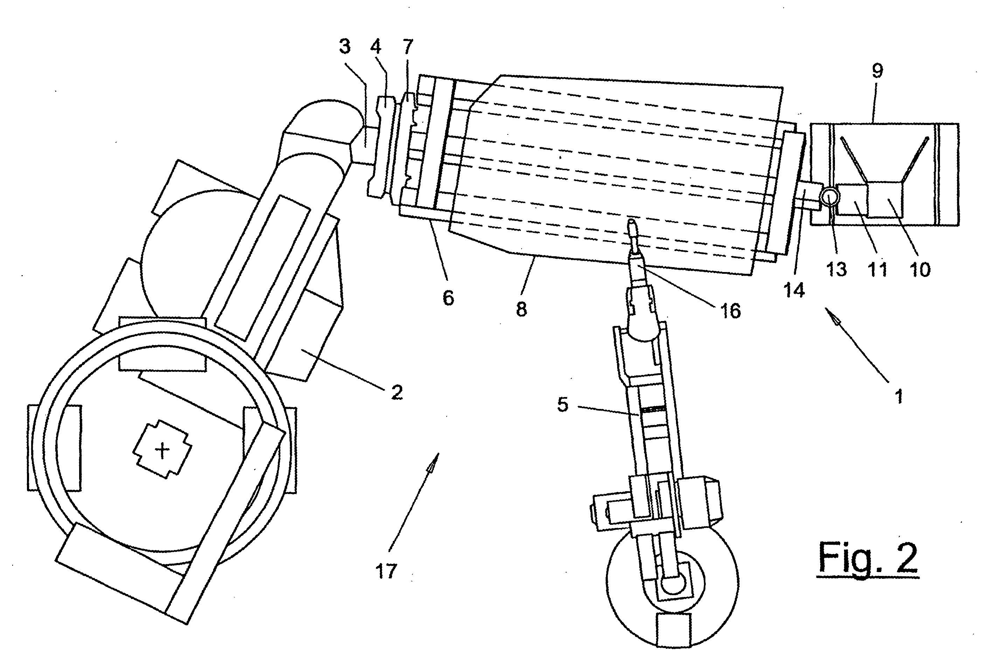

Die Anschlüsse (7) und die Sphären (13) sind vorzugsweise an den Rändern des Werkstückträgers (6) und an weit auseinanderliegenden Stellen angeordnet. In der Ausführungsform von Figur 1 und 2 befinden sie sich vorzugsweise an einander gegenüberliegenden Stellen. Hierdurch ist das Werkstück (8) für die Bearbeitungsvorrichtung (5) und die Werkzeuge (16) frei zugänglich. Figur 2 zeigt dies.

Beim Bearbeitungsprozeß bewegt der Manipulator (2) den Werkstückträger und das Werkstück (8) in unterschiedliche applikationsabhängige und prozeßgünstige Lagen und Orientierungen. Hierbei kann z.B. das Werkstück (8) beim Schweißen so geführt werden, daß das Schweißbad sich zumindest weitgehend in einer Wannenlage befindet. Zudem können der Manipulator (2) und die Bearbeitungsvorrichtung (5) sich synchron bewegen, um die optimale Prozeßlage auch bei gekrümmten Bearbeitungsbahnen einzuhalten. Hierfür ist eine geeignete Zellen- bzw. Robotersteuerung (nicht dargestellt) vorhanden.

Die Bearbeitungsvorgänge und die Bearbeitungsvorrichtungen (5) können in den verschiedenen Stationen oder Zellen (17) von unterschiedlicher und beliebiger Art und Ausbildung sein. Beispielsweise handelt es sich um Schweiß-, Klebeoder Beschichtungsprozesse. Zudem kann die Bearbeitungsvorrichtung (5) als mechanische oder optische Meßvorrichtung ausgebildet sein, die in einer Meßstation den Werkstückträger (6) mit dem gespannten Werkstück (8) durch ein Meßwerkzeug (16) abtastet. Zudem wird dann noch das Werkstück (8) nach Öffnen der Spannstellen des Werkstückträgers (6) vermessen. In einem dritten Schritt kann dann noch der Werkstückträger (6) ohne Werkstück (8) vermessen werden. Durch Vergleich der Meßergebnisse lassen sich Verzüge oder andere Geometrieänderungen feststellen und die Bearbeitungs- und Prozeßqualität sowie die Bauteilqualität überwachen.

Der Manipulator (2) kann über die Wechselvorrichtung (4) den Werkstückträger (6) auch zur nächsten Station oder Zelle weiterreichen. Dort kuppelt ein entsprechender Manipulator an einem zweiten Anschluß (7) an, übernimmt den Werkstückträger (6) und führt ihn einem weiteren Bearbeitungsprozeß zu, wobei wiederum eine Positioniereinrichtung (1) zum Einsatz kommen kann.

Abwandlungen der gezeigten Ausführungsform sind in verschiedener Weise möglich. Zum einen kann der Werkstückträger (6) entfallen. In diesem Fall hat das Werkstück (8) selbst geeignete Anschlüsse (7) und Sphären (13). Die Handhabung ist dann die gleiche wie beim Werkstückträger (6).

In einer weiteren Variante kann die Aufnahmevorrichtung (9) mit dem Gestell (10) und der Zentrieraufnahme (11) anders ausgebildet sein. Beispielsweise kann eine einfache Rohraufnahme vorhanden sein, die lediglich eine Drehbewegung um die Längsachse erlaubt. In diesem Fall wird die Sphäre (13) durch einen Kegel oder einen Zylinderstift ersetzt. In diesem Fall können der Werkstückträger (6) oder das Werkstück (8) nur um eine Bewegungsachse (15) verdreht werden. Darüber hinaus sind auch weitere Varianten der Ausbildung und Orientierungsmöglichkeiten möglich.

Der Manipulator (2) ist in der gezeigten Ausführungsform als Schwerlastroboter ausgebildet. Er kann auch in geeigneter anderer Weise aus ein oder mehreren Bewegungseinheiten bestehen.

### BEZUGSZEICHENLISTE

- 1: Positioniereinrichtung
- 2: Manipulator, Positionierroboter
- 3: Hand
- 4: Wechselvorrichtung
- 5: Bearbeitungsvorrichtung, Arbeitsroboter
- 6: Werkstückträger
- 7: Anschluß
- 8: Werkstück
- 9: Aufnahmevorrichtung
- 10: Gestell
- 11: Zentrieraufnahme, Prisma, Konus
- 12: Sensoranordnung
- 13: Sphäre, Kugelteil
- 14: Ansatz
- 15: Bewegungsachse
- 16: Werkzeug
- 17: Bearbeitungsstation, Zelle

## Patentansprüche

1. Verfahren zur Positionierung von Werkstückträgern (6) oder Werkstücken (8), die von einem mehrachsigen Manipulator (2) gehalten und geführt werden, wobei mindestens eine Aufnahmevorrichtung (9) vorgesehen ist, an welcher der Werkstückträger (6) oder das Werkstück (8) in ein oder mehreren Achsen (15) beweglich und in unterschiedlichen Lagen orientierbar abgestützt wird.

2. Verfahren nach Anspruch 1, **dadurch gekennzeichnet, dass** der Manipulator (2) den Werkstückträger (6) oder das Werkstück (8) an einer Stelle hält, die von der Abstützstelle an der Aufnahmevorrichtung (9) weit entfernt ist, wobei die beiden Stellen vorzugsweise einander gegenüberliegen.

3. Positioniervorrichtung für Werkstücke (8), die von einem mehrachsigen Manipulator (2) gehalten und geführt werden, mit mindestens einer Aufnahmevorrichtung (9), **dadurch gekennzeichnet, dass** die Positioniervorrichtung (1) einen mit dem Manipulator (2) verbindbaren Werkstückträger (6) für ein oder mehrere Werkstücke (8) oder ein direkt mit dem Manipulator (2) verbindbares Werkstück (8) aufweist, und dass der Werkstückträger (6) oder das Werkstück (8) an der Aufnahmevorrichtung (9) in ein oder mehreren Achsen (15) beweglich abstützbar und in unterschiedlichen Lagen orientierbar ist. Zentrieraufnahme (11) aufweist.

4. Positioniervorrichtung nach Anspruch 3, **dadurch gekennzeichnet, dass** die Aufnahmevorrichtung (9) mindestens eine

5. Positioniervorrichtung nach Anspruch 4, **dadurch gekennzeichnet, dass** die Zentrieraufnahme (11) als Prisma oder als Konus ausgebildet ist.

6. Positioniervorrichtung nach Anspruch 3, 4 oder 5, dadurch **gekennzeichne**t, dass die Aufnahmevorrichtung (9) ein ortsfestes oder bewegliches Gestell (10) aufweist, an dem die Zentrieraufnahme (11) angeordnet ist.

7. Positioniervorrichtung nach einem der Ansprüche 3 bis 6, **dadurch gekennzeichnet, dass** am Werkstückträger (6) oder am Werkstück (8) mindestens ein auf die Zentrieraufnahme (11) abgestimmtes Abstützelement, vorzugsweise eine Sphäre (13) oder ein Kugelteil, angeordnet ist.

8. Positioniervorrichtung nach einem der Ansprüche 3 bis 7, **dadurch gekennzeichnet, dass** der Werkstückträger (6) oder das Werkstück (8) mindestens einen Anschluß (7) zur Verbindung mit dem Manipulator (2) aufweist.

9. Positioniervorrichtung nach einem der Ansprüche 3 bis 8, **dadurch gekennzeichnet, dass** der Anschluß (7) randseitig zur fliegenden Lagerung am Manipulator (2) angeordnet ist.

10. Positioniervorrichtung nach Anspruch 8 oder 9, **dadurch gekennzeichnet, dass** das Abstützelement am Werkstückträger (6) oder am Werkstück (8) weit entfernt und vorzugsweise gegenüberliegend vom Anschluss (7) angeordnet ist.

11. Positioniervorrichtung nach einem der Ansprüche 8 bis 10, **dadurch gekennzeichnet, dass** der Manipulator (2) eine Wechselvorrichtung (4) zur lösbaren Verbindung mit dem Anschluß (7) aufweist.

12. Positioniervorrichtung nach einem der Ansprüche 3 bis 11, **dadurch gekennzeichnet, dass** die Aufnahmevorrichtung (9) mindestens eine Sensoranordnung (12) aufweist.

13. Positioniervorrichtung nach Anspruch 12, **dadurch gekennzeichnet, dass** die Sensoranordnung (12) an der Zentrieraufnahme (11), insbesondere zwischen Zentrieraufnahme (11) und Gestell (10) angeordnet ist.

14. Positioniervorrichtung nach Anspruch 12 oder 13, **dadurch gekennzeichnet, dass** die Sensoranordnung (12) ein oder mehrere kraftund/oder wegmessende Sensoren aufweist.

## Claims

1. Method for positioning workpiece carriers (6) or workpieces (8) which are held and guided by a multi-axial manipulator (2), wherein at least one receiving device (9) is provided in which the workpiece carrier (6) or the workpiece (8) is supported movably in one or more axes (15) and supported for orientation in different layers.

2. Method according to claim 1, **characterised in that** the manipulator (2) holds the workpiece carrier (6) or the workpiece (8) in a position which is far removed from the support position in the receiving device (9), wherein the two positions are preferably situated opposite one another.

3. Positioning device for workpieces (8) which are held and guided by a multi-axial manipulator (2), with at least one receiving device (9), **characterised in that** the positioning device (1) has a workpiece carrier (6), connectable to the manipulator (2), for one or more workpieces (8) or a workpiece (8) which can be directly connected to the manipulator (2), and that the workpiece carrier (6) or the workpiece (8) can be movably supported by the receiving device (9) in one or more axes (15) and can be orientated in different layers.

4. Positioning device according to claim 3, **characterised in that** the receiving device (9) has at least one centering seat (11).

5. Positioning device according to claim 4, **characterised in that** the centering seat (11) is constructed as a prism or cone.

6. Positioning device according to claim 3, 4 or 5, **characterised in that** the receiving device (9) has a fixed or movable frame (10) on which is arranged the centering seat (11).

7. Positioning device according to one of the claims 3 to 6, **characterised in that** in the workpiece carrier (6) or the workpiece (8) is arranged at least one support element, matched to the centering seat (11), preferably a sphere (13) or a ball part.

8. Positioning device according to one of the claims 3 to 7, **characterised in that** the workpiece carrier (6) or the workpiece (8) has at least one connection (7) for connecting to the manipulator (2).

9. Positioning device according to one of the claims 3 to 8, **characterised in that** the connection (7) is arranged on the manipulator (2) laterally to the floating bearing.

10. Positioning device according to claim 8 or 9, **characterised in that** the support element is arranged on the workpiece carrier (6) or the workpiece (8) far removed from the connection (7) and preferably opposite the connection (7).

11. Positioning device according to one of the claims 8 to 10, **characterised in that** the manipulator (2) has a change-over device (4) for releasably connecting to the connection (7).

12. Positioning device according to one of the claims 3 to 11, **characterised in that** the receiving device (9) has at least one sensor arrangement (12).

13. Positioning device according to claim 12, **characterised in that** the sensor arrangement is arranged in the centering seat (11), in particular between centering seat (11) and frame (10).

14. Positioning device according to claim 12 or 13, **characterised in that** the sensor arrangement (12) has one or more force and/or position-measuring sensors.

## Revendications

1. Procédé de mise en position de porte-pièces (6) ou de pièces (8), qui sont maintenus et guidés par un manipulateur (2) à plusieurs axes, au moins un dispositif (9) de réception étant prévu sur lequel le porte-pièces (6) ou la pièce (8) est soutenu en étant mobile dans un axe ou dans plusieurs axes (15) et en pouvant être orienté en des positions différentes.

2. Procédé suivant la revendication 1, **caractérisé en ce que** le manipulateur (2) maintient le porte-pièces (6) ou la pièce (8) en un point qui est éloigné du point d'appui sur le dispositif (9) de réception, les deux points étant de préférence opposés l'un à l'autre.

3. Dispositif de mise en position de pièces (8) qui sont maintenues et guidées par un manipulateur (2) à plusieurs axes, comprenant au moins un dispositif (9) de réception, **caractérisé en ce que** le dispositif (1) de mise en position a un porte-pièces (6) pouvant être relié au manipulateur (2) et destiné à porter une pièce (8) ou plusieurs pièces (8) ou une pièce (8) pouvant être reliée directement au manipulateur (2) et **en ce que** le porte-pièces (6) ou la pièce (8) peut être soutenu de manière mobile sur le dispositif (9) de réception dans un axe ou dans plusieurs axes (15) et peut être orienté :dans des positions différentes.

4. Dispositif de mise en position suivant la revendication 3, **caractérisé en ce que** le dispositif (9) de réception a au moins un logement de (11) de centrage.

5. Dispositif suivant la revendication 4, **caractérisé en ce que** le logement (11) de centrage est constitué sous forme de prisme ou sous forme de cône.

6. Dispositif suivant la revendications 3, 4 ou 5, **caractérisé en ce que** le dispositif (9) de réception a un bâti (10) à poste fixe ou mobile, sur lequel est placé le logement (11) de centrage.

7. Dispositif suivant l'une des revendications 3 à 6, **caractérisé en ce qu'**il est disposé sur le porte-pièces (6) ou sur la pièce (8), au moins un élément d'appui adapté au logement (11) de centrage, de préférence une sphère (13) ou une partie de bille.

8. Dispositif suivant l'une des revendications 3 à 7, **caractérisé en ce que** le porte-pièces (6) ou la pièce (8) a au moins un raccord (7) de liaison au manipulateur (2).

9. Dispositif suivant l'une des revendications 3 à 8, **caractérisé en ce que** le raccord (7) est monté sur le manipulateur (2) du côté du bord par rapport au palier en porte-à-faux.

10. Dispositif suivant la revendication 8 ou 9, **caractérisé en ce que** l'élément d'appui sur le porte-pièces (6) ou sur la pièce (8) est éloigné et, de préférence, opposé au raccord (7)

11. Dispositif suivant l'une des revendications 8 à 10, **caractérisé en ce que** le manipulateur (2) comporte un dispositif (4) de remplacement pour l'assemblage détachable au raccord (7).

12. Dispositif suivant l'une des revendications 3 à 11, **caractérisé en ce que** le dispositif (9) de réception a au moins un dispositif (12) de capteur.

13. Dispositif suivant la revendication 12, **caractérisé en ce que** le dispositif (12) de capteur est disposé sur le logement (11) de centrage, notamment entre le logement (11) de centrage et le bâti (10).

14. Dispositif suivant la revendication 12 ou 13, **caractérisé en ce que** le dispositif (12) de capteur a un ou plusieurs capteurs dynamométrique et/ou de mesure de déplacement.
